# EUROPEAN PATENT SPECIFICATION

(11) **EP 3 121 488 B1**
(45) Date of publication and mention of the grant of the patent: **23.12.2020**
(21) Application number: 16181039.5
(22) Date of filing: 25.07.2016
(51) Int. Cl.: F16H 57/04

(54) **REDUCTION GEAR**
UNTERSETZUNGSGETRIEBE
ENGRENAGE DE RÉDUCTION

(30) Priority: 23.07.2015 JP 2015146187
(43) Date of publication of application: 25.01.2017
(73) Proprietor: Nabtesco Corporation, Tokyo 102-0093 (JP)
(72) Inventor: MURAKAMI, Tomoyuki, Fuwa-gun, Gifu 503-2121 (JP); ASAKAWA, Yuichi, Fuwa-gun, Gifu 503-2121 (JP)
(74) Representative: Grünecker Patent- und Rechtsanwälte PartG mbB

(56) References cited:
- WO-A1-2014/171282
- JP-A- 2014 231 339
- US-A- 2 408 336

## Description

### BACKGROUND OF THE INVENTION

### Field of the Invention

The present invention relates to a reduction gear that includes a case having internal teeth formed on an inner peripheral side thereof and a gear having external teeth and disposed inside the case, the gear rotating through meshing of its external teeth with the internal teeth of the case.

### Background Art

A known reduction gear is configured so as to output a large torque from a power drive source such as an electric motor, as disclosed in, for example, Patent Document 1. In the reduction gear disclosed in Patent Document 1, rotation of the motor as the power drive source causes a crankshaft to rotate via, for example, an input gear and a spur gear. This rotation of the crankshaft results in load of an eccentric part fixed on the crankshaft acting on an external-tooth gear, causing the external-tooth gear to rotate eccentrically. The crankshaft rotationally held by the external-tooth gear rotates about its own axis, while orbitally revolving. This orbital motion of the crankshaft causes a carrier that rotatably holds the crankshaft to rotate. As a result, a large torque can be obtained from an output shaft that is spline-connected with the carrier.

The reduction gear disclosed in Patent Document 1 further includes a pair of output shaft bearings that rotatably hold the output shaft. The output shaft bearings are mounted on the output shaft between the carrier and a pinion. Each of the output shaft bearings is held in place by being clamped in an axial direction between a nut disposed below the carrier (on a side closer to the pinion than to the carrier in the axial direction) and the case. This arrangement results in the output shaft bearings being preloaded. Moreover, WO2014171282A discloses a reduction gear according to the preamble of claim 1.

### Prior Art Document

### Patent Document

Patent Document 1: Japanese Patent No. 5069650

### SUMMARY OF THE INVENTION

It is noted that, in the known reduction gear, a space between the carrier and the nut, and a space between the carrier and the output shaft bearings are hermetically sealed. As a result, the splined portion that fastens the carrier and the shaft is sealed from an outside of the carrier, so that lubricant is difficult to enter the splined portion. This can deteriorate lubrication performance between the carrier and the shaft, resulting in a reduced service life of the splined portion.

The present invention has been made in view of the foregoing situation and it is an object of the present invention to provide a reduction gear capable of enhancing lubrication performance of lubricant inside the reduction gear.

### Means for Solving the Problem

The present invention provides a reduction gear that includes the features of claim 1.

In the reduction gear, preferably, the lubricant supply groove is formed in the fixing member.

In the reduction gear, preferably, the lubricant supply groove is formed in a surface of the fixing member in contact with the carrier.

In the reduction gear, preferably, the lubricant supply groove is formed in a surface of the carrier in contact with the fixing member.

In the reduction gear, preferably, the lubricant supply groove is formed in a surface of the carrier in contact with the first main bearing.

In the reduction gear, preferably, the lubricant supply groove is formed in the first main bearing.

In the reduction gear, preferably, the lubricant supply groove is formed in a surface of the first main bearing in contact with the carrier.

The present invention can enhance lubrication performance of the lubricant inside the reduction gear.

### BRIEF DESCRIPTION OF THE DRAWINGS

Fig. 1 is a front elevational view, including a partial cutaway view, of an eccentric reduction gear according to an embodiment of the present invention.
Fig. 2 is a partial enlarged view of part of the reduction gear shown in Fig. 1.
Fig. 3 is a perspective view of a fixing nut as viewed from a first end side (lower side).
Fig. 4 is a perspective view of a distal portion carrier of a carrier as viewed from a second end side (upper side).
Fig. 5 is a perspective view of a proximal portion carrier of the carrier as viewed from the second end side (upper side).
Fig. 6 is a perspective view of the proximal portion carrier of the carrier as viewed from the first end side (lower side).
Fig. 7 is a front elevational view, including a partial cutaway view, of a planetary reduction gear according to a modification of the present invention.
Fig. 8 is a partial enlarged view of part of the reduction gear shown in Fig. 7.

### DETAILED DESCRIPTION OF THE INVENTION

Modes for carrying out the present invention will be described below with reference to the accompanying drawings. The reduction gear according to the embodiments of the present invention can be widely applied as a reduction gear that includes a carrier for rotatably holding a gear rotating in a case and an output shaft connected to the carrier.

An eccentric reduction gear 1 according to the present embodiment is suitably applied, for example, to a reduction gear incorporated in a yaw driving apparatus that provides yaw drive for rotating a nacelle with respect to a windmill tower or a pitch driving apparatus that provides pitch drive for rotating a blade shaft with respect to a hub on the nacelle side. It should be noted that the eccentric reduction gear 1 may also be used in various types of industrial machines and construction machines, in addition to the windmill.

### General Configuration

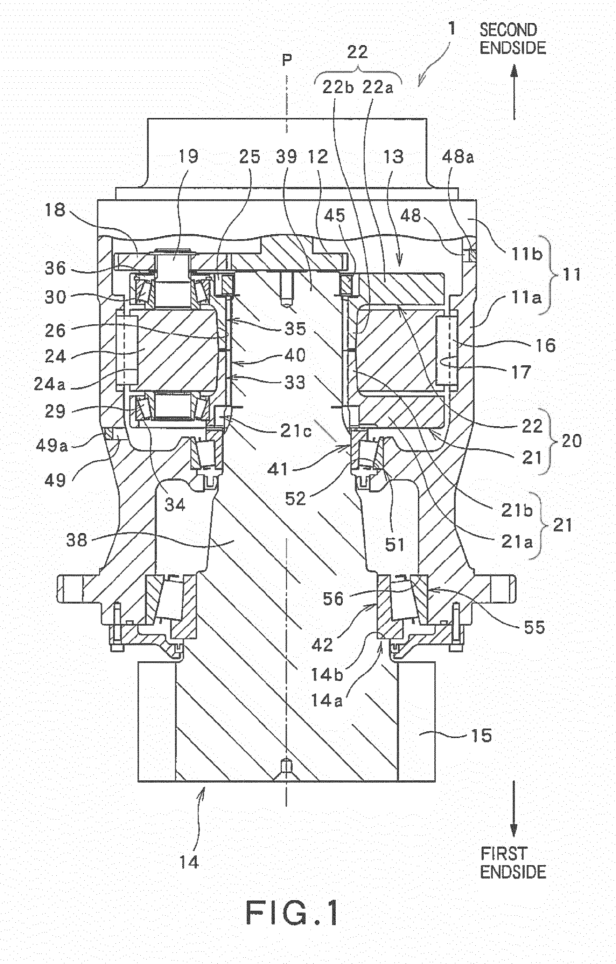

Fig. 1 is a front elevational view, including a partial cutaway view, of the eccentric reduction gear 1 according to the embodiment of the present invention. The eccentric reduction gear 1 is configured so as to reduce a speed of rotation applied from a motor (not shown) and transmit to output the rotation. The eccentric reduction gear 1 includes, for example, a case 11, an input gear 12, a speed reduction portion 13, an output shaft 14, and pin internal teeth 16.

Reference is made to Fig. 1. In the eccentric reduction gear 1, a pinion 15 is integrally formed with the output shaft 14 that is disposed on a first end side on a lower side so as to protrude from the case 11. The motor (not shown) is mounted on the case 11 on a second end side on an upper side. In the eccentric reduction gear 1, a rotational force applied from the motor disposed on the upper side undergoes speed reduction by, for example, the speed reduction portion 13 and the resultant rotation is transmitted and output to the pinion 15 of the output shaft 14. It should be noted that, as shown in Fig. 1, the eccentric reduction gear 1 will be described in a context that an output side disposed on the lower side of the output shaft 14 is the first end side and an input side disposed on the upper side on which the motor is mounted is the second end side.

As shown in Fig. 1, the case 11 includes a cylindrical first case portion 11a and a second case portion 11b disposed on the second end side of the first case portion 11a. The first case portion 11a and the second case portion 11b have edge portions connected with each other by bolts (not shown). The pin internal teeth 16 are disposed on an inner periphery of the case 11 and the speed reduction portion 13, for example, is disposed inside the case 11. It is noted that the input gear 12, the speed reduction portion 13, and the output shaft 14 are disposed in series along an axial direction in which a rotational centerline P (indicated by a dash-single-dot line in Fig. 1) of the eccentric reduction gear 1 extends. The case 11 has the first end side (the side of an end of the first case portion 11a) open and the second end side (the side of an end of the second case portion 11b) mounted with the motor (not shown) as described above.

The pin internal teeth 16 are disposed on the inner periphery of the case 11 in a condition of being fitted in pin grooves 17 formed in an inner periphery of the first case portion 11a. The pin internal teeth 16 (Fig. 1 shows an outline) are each formed into a pin-shaped member (circular bar-like member) and disposed so as to extend in parallel with the rotational centerline P. The pin internal teeth 16 are arrayed equidistantly and circumferentially along the inner periphery of the case 11. The pin internal teeth 16 are configured so as to mesh with an external-tooth gear 24 to be described later.

The input gear 12 is provided as a gear member having a short axis and disposed along the rotational centerline P. The input gear 12 has a toothed portion formed on an outer peripheral surface. The toothed portion meshes with a spur gear 18. The input gear 12 is configured so as to input a rotational drive force from the motor to the spur gear 18. In the following, the term "axial direction" refers to a direction extending along or in parallel with the rotational centerline P. A direction orthogonal to the rotational centerline P is a "radial direction" and a direction about the rotational centerline P is a "circumferential direction."

The speed reduction portion 13 includes the spur gear 18, a crankshaft 19, a carrier 20, the external-tooth gear 24, and the like. The spur gear 18 is disposed in plurality (three in the present embodiment) around the input gear 12 so as to mesh with the toothed portion of the input gear 12. The spur gears 18 are disposed in the radial direction of the eccentric reduction gear 1 with respect to the input gear 12. The spur gears 18 each have a through hole formed at a center and are each fixed, in the through hole, through a spline connection with the second end side of the crankshaft 19.

The crankshaft 19 is disposed in plurality (three in the present embodiment) at equiangular positions along the circumferential direction of the inner periphery of the case 11. The crankshafts 19 are each disposed such that an axis thereof extends in parallel with the rotational centerline P. Each of the crankshafts 19 (Fig. 1 shows an outline) is disposed so as to pass through a crank hole (not shown) formed in the external-tooth gear 24. The crankshafts 19 are each provided as a shaft member that rotates to cause the external-tooth gear 24 to eccentrically rotate. Thus, the crankshafts 19 each make an orbital motion, while rotating about its own axis to thereby rotate the external-tooth gear 24.

The external-tooth gear 24 is provided in plurality (e.g., two), housed inside the case 11. The external-tooth gears 24 are disposed to be in parallel with each other. Each of the external-tooth gears 24 has a through hole 26 formed at a center thereof. A spline shaft portion 39 of the output shaft 14 is passed through the through hole 26. The crankshafts 19 are passed through each of the external-tooth gears 24 at equidistant positions in the circumferential direction.

Each of the external-tooth gears 24 has external teeth 24a formed on an outer periphery thereof. The external teeth 24a mesh with the pin internal teeth 16. Specifically, each of the external-tooth gears 24 constitutes a gear having the external teeth 24a that mesh with the pin internal teeth 16. The external teeth 24a of each external-tooth gear 24 have a number of teeth smaller by one tooth or a plurality of teeth than the number of teeth of the pin internal teeth 16. As a result, each rotation of the crankshaft 19 results in a deviated point of engagement between the external teeth 24a and the pin internal teeth 16, so that the external-tooth gear 24 makes eccentric and oscillatory rotation. The external-tooth gear 24 rotatably holds the crankshaft 19 via an external-tooth bearing (not shown).

The carrier 20 is disposed inside the case 11. The carrier 20 includes a proximal portion carrier 21 and a distal portion carrier 22. The carrier 20 rotatably holds the crankshafts 19 on the first end side and the second end side.

The proximal portion carrier 21 includes a proximal portion side circular ring portion 21a and a proximal portion side cylindrical portion 21b integrally formed with each other. Specifically, the proximal portion side circular ring portion 21a is substantially formed into a circular ring shape having a relatively thick wall thickness. The proximal portion side cylindrical portion 21b is substantially formed into a cylindrical shape. The proximal portion carrier 21 is disposed such that the proximal portion side circular ring portion 21a and the proximal portion side cylindrical portion 21b have respective central axes coaxial with each other and that the proximal portion side circular ring portion 21a is disposed on the first end side. The proximal portion side cylindrical portion 21b has a through hole disposed at a center of the proximal portion carrier 21 and provided as a spline hole 33 in which spline grooves (carrier side spline portion) are formed to extend in the circumferential direction about the rotational centerline P.

The proximal portion carrier 21 has a plurality of crank holding holes 34 formed therein. The crank holding holes 34 assume through holes formed at equiangular positions along the circumferential direction about the rotational centerline P. Through the crank holding holes 34, the proximal portion carrier 21 rotatably holds the crankshafts 19 on the first end side via crankshaft bearings 29. Additionally, the proximal portion side circular ring portion 21a has a proximal portion side shoulder portion 21c formed in a surface on an inner peripheral side on the first end side thereof. The proximal portion side shoulder portion 21c is recessed toward the second end side.

The distal portion carrier 22 includes a distal portion side circular ring portion 22a and a distal portion side cylindrical portion 22b integrally formed with each other. Specifically, the distal portion side circular ring portion 22a is substantially formed into a circular ring shape having a relatively thick wall thickness. The distal portion side cylindrical portion 22b is substantially formed into a cylindrical shape. The distal portion carrier 22 is disposed such that the distal portion side circular ring portion 22a and the distal portion side cylindrical portion 22b have respective central axes coaxial with each other and that the distal portion side circular ring portion 22a is disposed on the second end side. The distal portion side cylindrical portion 22b has a through hole disposed at a center of the proximal portion carrier 21 and provided as a spline hole 35 in which spline grooves (carrier side spline portion) are formed to extend in the circumferential direction about the rotational centerline P.

The distal portion carrier 22 has a plurality of crank holding holes 36 formed therein. The crank holding holes 36 assume through holes formed at equiangular positions along the circumferential direction about the rotational centerline P. Through the crank holding holes 36, the distal portion carrier 22 rotatably holds the crankshafts 19 on the second end side via crankshaft bearings 30.

Additionally, the distal portion side circular ring portion 22a has a distal portion side shoulder portion 25 formed in a surface on an inner peripheral side on the second end side thereof. The distal portion side shoulder portion 25 is recessed toward the first end side. A fixing nut 45 (fixing member) is housed in the distal portion side shoulder portion 25. Specifically, the distal portion side shoulder portion 25 constitutes a countersink in which the fixing nut 45 is housed. The fixing nut 45 constitutes a fixing member fixed to the output shaft 14.

The proximal portion carrier 21 and the distal portion carrier 22 are connected with each other in a condition in which the distal portion carrier 22 is stacked on the proximal portion carrier 21 in the axial direction. More specifically, in a condition in which an end of the proximal portion side cylindrical portion 21b and an end of the distal portion side cylindrical portion 22b are in contact with each other and a portion of the proximal portion carrier 21 on the first end side is supported by a first main bearing 41 held in the case 11, the fixing nut 45 disposed at the distal portion side shoulder portion 25 is tightened so as to be pressed against the carrier 20 side. This results in the proximal portion carrier 21 and the distal portion carrier 22 being clamped and held between the fixing nut 45 and the first main bearing 41.

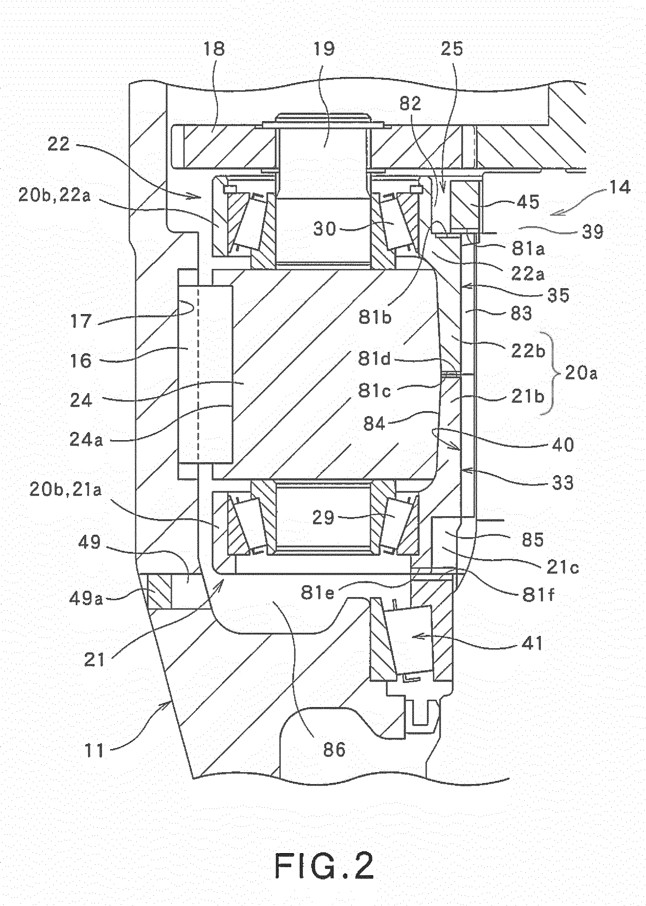

Fig. 2 is a partial enlarged view of part of the reduction gear shown in Fig. 1. As shown in Fig. 2, the carrier 20 includes an output shaft side portion 20a and an outside portion 20b. The output shaft side portion 20a is connected to the output shaft 14. The outside portion 20b constitutes a portion of the carrier 20 outside the output shaft side portion 20a in the radial direction.

The output shaft side portion 20a includes a portion of the proximal portion carrier 21, in which the spline grooves are formed and a portion of the distal portion carrier 22, in which the spline grooves are formed. In the present embodiment, the output shaft side portion 20a includes the proximal portion side cylindrical portion 21b and the distal portion side cylindrical portion 22b. The outside portion 20b includes the proximal portion side circular ring portion 21a and the distal portion side circular ring portion 22a, from which portions near inner peripheral edges are excluded.

Reference is made to Fig. 1. The output shaft 14 has an end on the first end side, on which the pinion 15 is integrally formed, protruding from the case 11 and an end on the second end side, disposed inside the case 11, connected with the carrier 20. The output shaft 14 is disposed such that a rotational centerline thereof is aligned with the rotational centerline P. In the output shaft 14, the pinion 15, an output shaft portion 38, and the spline shaft portion 39 are disposed in series along the axial direction from the first end side to the second end side.

The pinion 15 is integrally formed at an end on the first end side of the output shaft 14 that protrudes from the opening on the first end side of the case 11. The output shaft portion 38 is rotatably supported with respect to the case 11 by a pair of main bearings 41 and 42 provided as a pair of tapered roller bearings.

The spline shaft portion 39 is disposed so as to protrude toward the through hole 26 in the external-tooth gear 24 to thereby form a spline portion 40 (output shaft side spline portion) connected to the carrier 20. The spline portion 40 is formed as a plurality of spline teeth, each extending generally and continuously along the axial direction of the spline shaft portion 39. The spline portion 40 is provided over an entire periphery of the spline shaft portion 39. The spline portion 40 is formed to extend in the axial direction of the output shaft 14 between a portion held by the fixing nut 45 in the distal portion carrier 22 and a portion held by the first main bearing 41 in the proximal portion carrier 21.

A portion on the first end side of the spline teeth of the spline portion 40 of the spline shaft portion 39 fits into the spline grooves in the spline hole 33 in the proximal portion carrier 21. A portion on the second end side of the spline teeth of the spline portion 40 fits into the spline grooves in the spline hole 35 in the distal portion carrier 22. This arrangement results in the spline portion 40 being connected with the proximal portion carrier 21 and the distal portion carrier 22, to thereby establish a spline connection between the output shaft 14 and the carrier 20. Additionally, the spline shaft portion 39 is formed to have a radial dimension greater than a diameter dimension of the crankshaft 19.

The eccentric reduction gear 1 includes a pair of main bearings 41 and 42. The main bearings 41 and 42 rotatably support the output shaft 14 with respect to the case 11. The main bearings 41 and 42 include the first main bearing 41 disposed on the carrier 20 side in the axial direction and the second main bearing 42 disposed on the side opposite to the carrier 20 in the axial direction.

The first main bearing 41 is disposed on a portion of the output shaft 14 on the first end side of the carrier 20. The first main bearing 41 includes an inner race mounted on the output shaft 14 and an outer race mounted on a first shoulder portion 51 formed in the first case portion 11a. In the radial direction, the first main bearing 41 is clamped between the output shaft 14 and the first shoulder portion 51. In the axial direction, the first main bearing 41 is clamped between a first support surface 52 (first support portion) formed in the first shoulder portion 51 and an end of the proximal portion carrier 21 on the first end side. The first support surface 52 is formed such that a normal direction is toward the carrier 20 side (second end side).

The second main bearing 42 is disposed on a portion of the output shaft 14 opposite to the carrier 20, specifically, near the pinion 15 in the output shaft 14. The second main bearing 42 includes an inner race mounted on the output shaft 14 and an outer race mounted on a second shoulder portion 55 formed in the first case portion 11a. In the radial direction, the second main bearing 42 is clamped between the output shaft 14 and the second shoulder portion 55. In the axial direction, the second main bearing 42 is clamped between an output shaft side support surface 14b (output shaft side support portion) formed in an output shaft shoulder portion 14a of the output shaft 14 and a second support surface 56 (second support portion) formed in the second shoulder portion 55. The output shaft side support surface 14b is formed such that a normal direction is toward the carrier 20 side (second end side). The second support surface 56 is formed such that a normal direction is toward the side opposite to the carrier 20 (first end side), specifically, the second support surface 56 is formed so as to face the output shaft side support surface 14b in the axial direction.

In the present embodiment, the first and second main bearings 41 and 42 are preloaded. The preload can be applied to the first and second main bearings 41 and 42 by tightening the fixing nut 45 against the output shaft 14. The preload refers to pressure applied to a pair of bearings through assembly of the bearings such that the bearings are pressed against each other.

More specifically, tightening the fixing nut 45 against the output shaft 14 causes the carrier 20 and the first and second main bearings 41 and 42 to be clamped between the fixing nut 45 and the output shaft side support surface 14b.

The foregoing results in preload acting on the first main bearing 41 by being clamped between the first support surface 52 and the proximal portion carrier 21. The foregoing results in preload acting on the second main bearing 42 by being clamped between the second support surface 56 and the output shaft side support surface 14b.

Specifically, the tightening of the fixing nut 45 against the output shaft 14 achieves both of the following simultaneously: specifically, connecting the proximal portion carrier 21 and the distal portion carrier 22 together to thereby position the proximal portion carrier 21 and the distal portion carrier 22 with respect to the output shaft 14 in the axial direction; and applying preload to both of the first and second main bearings 41 and 42.

### Lubricant Supply Grooves

In the present embodiment, the case 11 (first case portion 11a) has a lubricant supply port 48 disposed on the second end side thereof. The lubricant supply port 48 is a port through which lubricant is supplied into the case 11. A lubricant supply port cap 48a is threadedly attached to the lubricant supply port 48. Meanwhile, a lubricant discharge port 49 for discharging lubricant supplied from the lubricant supply port 48 and packed in the case 11 is disposed at a position around the speed reduction portion 13 of the case 11 (first case portion 11a). A lubricant discharge port cap 49a is threadedly attached to the lubricant discharge port 49. For removal and reinstallation of the lubricant supply port cap 48a and the lubricant discharge port cap 49a from/to the case 11, a hexagonal hole that opens outwardly the case 11 is drilled in each of the lubricant supply port cap 48a and the lubricant discharge port cap 49a.

Reference is made to Fig. 2. Lubricant supply grooves 81a to 81f through which the lubricant supplied from the lubricant supply port 48 and packed in the case 11 is supplied (passed) are formed in the fixing nut 45, the carrier 20, and the first main bearing 41. The lubricant supply grooves 81a to 81f each communicate with an internal space 83 defined between the carrier 20 and the output shaft 14. It should be noted that the internal space 83 is, more specifically, a small space created between the spline grooves in the spline holes 33 and 35 and the spline teeth of the spline portion 40.

In this case, the lubricant supply grooves 81a to 81f each extend in the radial direction. This is, however, not the only possible arrangement and the lubricant supply grooves 81a to 81f are each required only to be disposed in a plane that is orthogonal to the rotational centerline P. Additionally, the lubricant supply grooves 81a to 81f are each disposed at four places at uniform intervals along the circumferential direction. The number and positions of the lubricant supply grooves 81a to 81f are not, however, limited to the foregoing. Additionally, the lubricant supply grooves 81a to 81f each extend linearly. This is, however, not the only possible configuration and the lubricant supply grooves 81a to 81f may each extend obliquely with respect to the radial direction, or be curved or cranked.

As shown in Fig. 2, the lubricant supply groove 81a and the lubricant supply groove 81b each provide communication between an internal space 82 disposed on the inside of the distal portion side shoulder portion 25 and the internal space 83 defined between the carrier 20 and the output shaft 14. The lubricant supply groove 81a is formed in the fixing nut 45 and the lubricant supply groove 81b is formed in the distal portion carrier 22 of the carrier 20. Having the lubricant supply groove 81a and the lubricant supply groove 81b enables the lubricant to smoothly flow between the internal space 82 and the internal space 83.

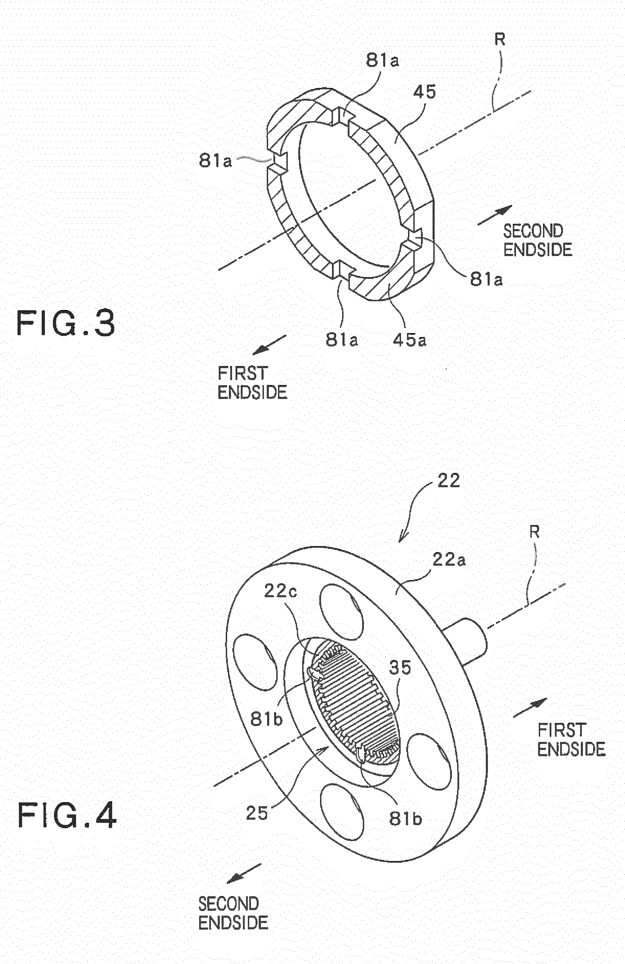

Fig. 3 is a perspective view of the fixing nut 45 as viewed from the first end side (lower side). As shown in Fig. 3, the lubricant supply groove 81a is formed in plurality (four in Fig. 3) in a surface 45a (surface on the first end side) of the fixing nut 45, in contact with the carrier 20. The surface 45a in contact with the carrier 20 is hatched in Fig. 3. In this case, the lubricant supply grooves 81a are formed to extend an entire width in the radial direction of a ring that constitutes the fixing nut 45. This is, however, not the only possible configuration and the lubricant supply grooves 81a may be formed to extend only part of the entire width in the radial direction of the ring that constitutes the fixing nut 45.

Fig. 4 is a perspective view of the distal portion carrier 22 as viewed from the second end side (upper side). As shown in Fig. 4, the lubricant supply groove 81b is formed in plurality (four in Fig. 4) in a surface 22c (bottom surface of the distal portion side shoulder portion 25) of the distal portion carrier 22, in contact with the fixing nut 45. The surface 22c in contact with the fixing nut 45 is hatched in Fig. 4.

Reference is made to Fig. 2. The lubricant supply groove 81c and the lubricant supply groove 81d each provide communication between the internal space 83 defined between the carrier 20 and the output shaft 14 and an internal space 84 defined between the carrier 20 and the external-tooth gear 24. The lubricant supply groove 81c is formed in the distal portion carrier 22 of the carrier 20 and the lubricant supply groove 81d is formed in the proximal portion carrier 21 of the carrier 20. Having the lubricant supply groove 81c and the lubricant supply groove 81d enables the lubricant to smoothly flow between the internal space 83 and the internal space 84.

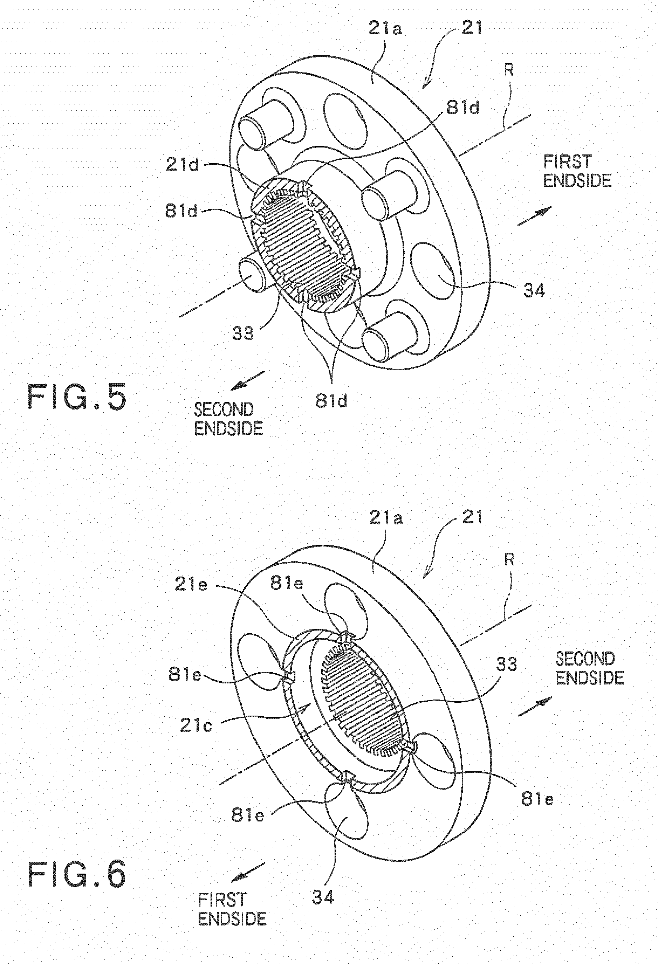

Fig. 5 is a perspective view of the proximal portion carrier 21 as viewed from the second end side (upper side). As shown in Fig. 5, the lubricant supply groove 81d is formed in plurality (four in Fig. 5) in a surface 21d (upper end surface of the proximal portion side cylindrical portion 21b) of the proximal portion carrier 21, in contact with the distal portion carrier 22. The surface 21d in contact with the distal portion carrier 22 is hatched in Fig. 5. In this case, the lubricant supply grooves 81d are formed to extend an entire width in the radial direction of a ring that constitutes the upper end surface of the proximal portion side cylindrical portion 21b.

As with the lubricant supply groove 81d, the lubricant supply groove 81c is formed in plurality in a surface (lower end surface of the distal portion side cylindrical portion 22b) of the distal portion carrier 22, in contact with the proximal portion carrier 21.

Reference is made again to Fig. 2. The lubricant supply groove 81e and the lubricant supply groove 81f each provide communication between an internal space 85 disposed on the inside of the proximal portion side shoulder portion 21c and a subjacent space 86 beneath the proximal portion carrier 21. The lubricant supply groove 81e is formed in the proximal portion carrier 21 of the carrier 20 and the lubricant supply groove 81f is formed in the race of the first main bearing 41. Having the lubricant supply groove 81e and the lubricant supply groove 81f enables the lubricant to smoothly flow between the internal space 85 and the subjacent space 86.

Fig. 6 is a perspective view of the proximal portion carrier 21 as viewed from the first end side (lower side). As shown in Fig. 6, the lubricant supply groove 81e is formed in plurality (four in Fig. 6) in a surface 21e (surface on the first end side) of the proximal portion carrier 21, in contact with the first main bearing 41. The surface 21e in contact with the first main bearing 41 is hatched in Fig. 6. In this case, the lubricant supply grooves 81e are formed to extend from the proximal portion side shoulder portion 21c to the crank holding holes 34.

The lubricant supply groove 81f is formed in plurality in a surface (upper surface of the race of the first main bearing 41) of the first main bearing 41, in contact with the proximal portion carrier 21.

Although the illustrated embodiment includes all of the lubricant supply grooves 81a to 81f, fewer or any one of the lubricant supply groove 81a to 81f may be provided.

### Operation

Operation of the eccentric reduction gear 1 will be described below. The eccentric reduction gear 1 is operated through an operation of a motor not shown. When the motor is started, the input gear 12 is rotated. The rotation of the input gear 12 causes the spur gears 18 meshing with the input gear 12 to rotate. As a result, the crankshafts 19 to which the spur gears 18 are fixed are rotated. As the crankshafts 19 rotate, the external-tooth gear 24 makes eccentric and oscillatory rotation, while having a deviated point of engagement between the external-tooth gear 24 and the pin internal teeth 16. Through the eccentric rotation of the external-tooth gear 24, the crankshafts 19 that are rotationally held by the external-tooth gear 24 rotate about their own axes, while orbitally revolving about the rotational centerline P. This orbital motion of the crankshafts 19 causes the carrier 20 that rotatably holds the first end sides and the second end sides of the crankshafts 19 with the proximal portion carrier 21 and the distal portion carrier 22 to rotate. The output shaft 14 connected with the proximal portion carrier 21 and the distal portion carrier 22 of the carrier 20 through a spline connection by the spline portion 40 of the spline shaft portion 39 is then rotated, so that a large torque is output from the pinion 15. Because of the preload applied to the first and second main bearings 41 and 42 as described previously, rotational accuracy can be enhanced and vibration and noise can be reduced.

During the operation described above, lubricant flows inside the case 11 as the crankshafts 19, the proximal portion carrier 21, the distal portion carrier 22, and the like operate. Lubricant present in the internal space 82 disposed on the inside of the distal portion side shoulder portion 25 passes through the lubricant supply groove 81a and the lubricant supply groove 81b to flow toward the internal space 83 defined between the carrier 20 and the output shaft 14. As a result, lubricant is smoothly supplied between the spline grooves in the spline hole 35 and the spline teeth of the spline portion 40.

The lubricant that has flowed into the internal space 83 further passes through the lubricant supply groove 81c and the lubricant supply groove 81d to flow to the internal space 84 defined between the carrier 20 and the external-tooth gear 24. As a result, the lubricant is supplied to the internal space 84 defined between the carrier 20 and the external-tooth gear 24.

Additionally, the lubricant that has flowed into the internal space 84 flows axially along the spline shaft portion 39 between the spline grooves in the spline hole 33 and the spline teeth of the spline portion 40. The lubricant thereafter passes through the lubricant supply groove 81e and the lubricant supply groove 81f to flow from the internal space 85 disposed on the inside of the proximal portion side shoulder portion 21c and the subjacent space 86 beneath the proximal portion carrier 21. A sufficient amount of lubricant is thus supplied axially along the spline shaft portion 39 through the foregoing manner.

### Effects

As described above, in accordance with the present embodiment, the lubricant supply grooves 81a to 81f for supplying lubricant are formed in the fixing nut 45, the carrier 20, and the first main bearing 41. This configuration enables the lubricant to be supplied axially along the spline shaft portion 39 into the internal space 83 defined between the carrier 20 and the output shaft 14. This capability achieves favorable lubrication performance of the carrier 20 and the output shaft 14 and a fault in which the service life of the spline portion (the spline grooves in the spline holes 33 and 35 and the spline teeth of the spline portion 40) is shortened can be prevented from occurring.

While the embodiment of the present invention has been described in detail, it should be understood that the embodiment is illustrative only and not limiting. Various changes in form and detail may be made therein without departing from the spirit and scope of the invention. The following modification may, for example, be implemented.

### Modification

The embodiment has been described for the eccentric reduction gear 1 to which the present invention is exemplarily applied. The present invention may nonetheless be applied to a planetary reduction gear 2.

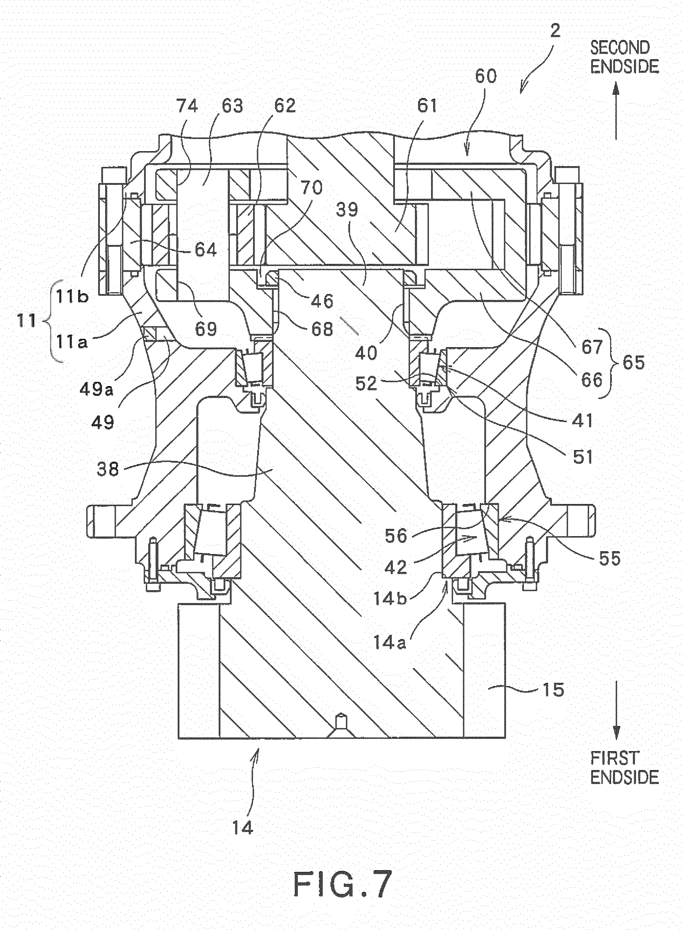

Fig. 7 is a front elevational view, including a partial cutaway view, of the planetary reduction gear 2 according to a modification of the present invention. The planetary reduction gear 2 according to the modification differs from the eccentric reduction gear 1 according to the above-described embodiment in mainly a configuration of a speed reduction portion. The following describes mainly differences from the above-described embodiment. Like or corresponding parts are identified by the same reference numerals as those used for the above-described embodiment and descriptions for those parts will be omitted.

As shown in Fig. 7, a speed reduction portion 60 of the planetary reduction gear 2 in the modification includes, for example, a sun gear 61, a planetary gear 62, a planetary gear shaft portion 63, a ring gear 64, and a planetary carrier (carrier) 65. In the speed reduction portion 60, a rotational drive force from a motor is input to the sun gear 61 as an input gear and the sun gear 61 rotates. Then, the planetary gear 62 that meshes with the sun gear 61 rotates on its own axis, while revolving around the sun gear 61. This results in the planetary carrier 65 that rotatably supports the planetary gear 62 via the planetary gear shaft portion 63 rotating, so that an output shaft 14 connected through a spline connection with the planetary carrier 65 is rotated. A large torque can thus be obtained from the output shaft 14.

The planetary carrier 65 includes a proximal portion carrier 66 and a distal portion carrier 67 integrated with each other. The planetary carrier 65 is disposed inside a case 11 and configured so as to rotatably hold first end sides and second end sides of a plurality of planetary gear shaft portions 63. In the planetary carrier 65, the proximal portion carrier 66 and the distal portion carrier 67 have outer edge portions connected with each other in a condition of being spaced apart from each other in the axial direction. The sun gear 61 and a plurality of planetary gears 62 are disposed between the proximal portion carrier 66 and the distal portion carrier 67.

The proximal portion carrier 66 is a substantially disc-shaped portion of the planetary carrier 65 on the first end side. The proximal portion carrier 66 has a through hole and a plurality of shaft holding holes 69. The through hole is formed at a center of the proximal portion carrier 66, assuming a spline hole 68 in which spline grooves (carrier side spline portion) are formed to extend in the circumferential direction about a rotational centerline P. The shaft holding holes 69 are formed at equiangular positions along the circumferential direction about the rotational centerline P. The planetary gear shaft portions 63 have ends on the first end side passed through the shaft holding holes 69.

A carrier shoulder portion 70 is formed at a portion on an inner peripheral side of a surface of the proximal portion carrier 66 on the second end side. The carrier shoulder portion 70 is recessed toward the first end side. A fixing nut 46 (fixing member) is housed in the carrier shoulder portion 70. Specifically, the carrier shoulder portion 70 is provided as a countersink in which the fixing nut 46 is housed. The fixing nut 46 constitutes a fixing member to be fixed to the output shaft 14.

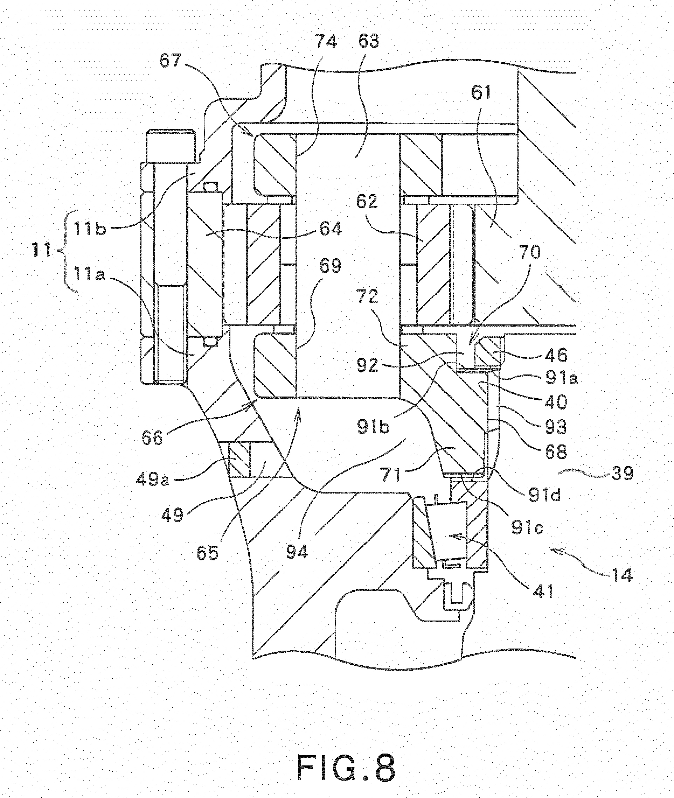

Fig. 8 is a partial enlarged view of part of the planetary reduction gear 2 shown in Fig. 7. As shown in Fig. 8, the proximal portion carrier 66 includes an output shaft side portion 71 and an outside portion 72. In the proximal portion carrier 66, the output shaft side portion 71 is connected to the output shaft 14. The outside portion 72 constitutes a portion of the proximal portion carrier 66 outside the output shaft side portion 71 in the radial direction.

As shown in Fig. 8, the output shaft side portion 71 represents a portion of the proximal portion carrier 66, in which the spline grooves are formed. The outside portion 72 represents a portion of the proximal portion carrier 66, from which portions near inner peripheral edges are excluded.

The distal portion carrier 67 is a substantially disc-shaped portion that constitutes a portion of the planetary carrier 65 on the second end side. The distal portion carrier 67 has a plurality of shaft holding holes 74. The shaft holding holes 74 are formed at equiangular positions along the circumferential direction about the rotational centerline P. The planetary gear shaft portions 63 have ends on the second end side passed through the shaft holding holes 74.

The planetary carrier 65 is correctly positioned on the output shaft 14 in the axial direction by the fixing nut 46. More specifically, the fixing nut 46 disposed at the carrier shoulder portion 70 is tightened under a condition in which a portion of the proximal portion carrier 66 on the first end side is supported by a first main bearing 41. The tightening of the fixing nut 46 clamps to correctly position the planetary carrier 65 between the fixing nut 46 and the first main bearing 41.

As in the above-described embodiment, a pinion 15, an output shaft portion 38, and a spline shaft portion 39 are disposed in series along the axial direction from the first end side to the second end side on the output shaft 14. The pinion 15, the output shaft portion 38, and the spline shaft portion 39 are disposed such that centerlines thereof are aligned with the rotational centerline P. Additionally, as in the above-described embodiment, the output shaft 14 is rotatably supported with respect to the case 11 by a pair of main bearings 41 and 42 provided as a pair of tapered roller bearings.

The spline shaft portion 39 has a spline portion 40 that is connected to the planetary carrier 65. Spline teeth of the spline portion 40 are provided over an entire periphery of the spline shaft portion 39. The spline portion 40 is formed to extend in the axial direction of the output shaft 14 to cover an area between a portion of the proximal portion carrier 66 held by the fixing nut 46 and a portion of the proximal portion carrier 66 held by the first main bearing 41. The spline portion 40 fits into spline grooves formed in the spline hole 68 in the proximal portion carrier 66. This results in the output shaft 14 and the planetary carrier 65 being connected with each other through a spline connection.

As with the eccentric reduction gear 1 according to the above-described embodiment, the planetary reduction gear 2 according to the modification also includes, as the pair of main bearings 41 and 42, the first main bearing 41 disposed on the planetary carrier 65 side in the axial direction and the second main bearing 42 disposed on a side opposite to the planetary carrier 65 in the axial direction. The first main bearing 41 is disposed at a portion on the first end side of the planetary carrier 65 in the output shaft 14. In the radial direction, the first main bearing 41 is clamped between the output shaft 14 and a first shoulder portion 51. In the axial direction, the first main bearing 41 is clamped between a first support surface 52 and an end of the proximal portion carrier 66 on the first end side.

The second main bearing 42 is disposed near the pinion 15 in the output shaft 14. In the radial direction, the second main bearing 42 is clamped between the output shaft 14 and a second shoulder portion 55. In the axial direction, the second main bearing 42 is clamped between a output shaft side support surface 14b and a second support surface 56.

In the planetary reduction gear 2 according to the modification, too, the fixing nut 46 is tightened against the output shaft 14. As in the above-described embodiment, the tightening of the fixing nut 46 achieves both of the following simultaneously: specifically, correctly positioning the planetary carrier 65 with respect to the output shaft 14 in the axial direction; and applying preload to both of the first and second main bearings 41 and 42.

Reference is made to Fig. 8. Lubricant supply grooves 91a to 91d through which the lubricant packed in the case 11 is supplied (passed) are formed in the fixing nut 46, the planetary carrier 65, and the first main bearing 41. The lubricant supply grooves 91a to 91d each communicate with an internal space 93 defined between the planetary carrier 65 and the output shaft 14. The internal space 93 is formed between the spline grooves in the spline hole 68 and the spline teeth of the spline portion 40.

The lubricant supply groove 91a and the lubricant supply groove 91b each provide communication between an internal space 92 disposed on the inside of the carrier shoulder portion 70 and the internal space 93 defined between the planetary carrier 65 and the output shaft 14. The lubricant supply groove 91a is formed in a surface of the fixing nut 46 in contact with the planetary carrier 65. The lubricant supply groove 91b is formed in a surface of the distal portion carrier 67 in contact with the fixing nut 46. Having the lubricant supply groove 91a and the lubricant supply groove 91b enables the lubricant to smoothly flow between the internal space 92 and the internal space 93.

The lubricant supply groove 91c and the lubricant supply groove 91d each provide communication between the internal space 93 defined between the planetary carrier 65 and the output shaft 14 and a subjacent space 94 beneath the planetary carrier 65. The lubricant supply groove 91c is formed in a surface of the proximal portion carrier 66 in contact with the first main bearing 41. The lubricant supply groove 91d is formed in a surface of the first main bearing 41 in contact with the proximal portion carrier 66. Having the lubricant supply groove 91c and the lubricant supply groove 91d enables the lubricant to smoothly flow between the internal space 93 and the subjacent space 94.

Although the illustrated modification includes all of the lubricant supply grooves 91a to 91d, fewer or any one of the lubricant supply groove 91a to 91d may be provided.

In the modification described above, as in the embodiment described previously, the lubricant supply grooves 91a to 91d for supplying the lubricant are formed in the fixing nut 46, the planetary carrier 65, and the first main bearing 41. This configuration enables the lubricant to be supplied axially along the spline shaft portion 39 into the internal space 93 defined between the planetary carrier 65 and the output shaft 14. This capability achieves favorable lubrication performance of the planetary carrier 65 and the output shaft 14 and a fault in which the service life of the spline portion (the spline grooves in the spline hole 68 and the spline teeth of the spline portion 40) is shortened can be prevented from occurring.

## Claims

1. A reduction gear (1) comprising:
a case (11) having internal teeth (16) formed on an inner peripheral side thereof;
a gear (24) having external teeth (24a) meshing with the internal teeth (16);
a carrier (20) that rotatably holds the gear (24);
an output shaft (14) connected to the carrier (20);
a first main bearing (41) disposed on a portion of the output shaft (14) on a first end side of the carrier (20),
a second main bearing (42) disposed on a portion of the output shaft (14) opposite to the carrier (20); wherein the first main bearing (41) and the second main bearing (42) rotatably holding the output shaft (14) with respect to the case (11);
and
a fixing member (45) disposed on a portion of the carrier (20) on a side opposite to the first main bearing (41) and fixed to the output shaft (14) in a condition of being pressed against the carrier (20) side,
**characterized in that**
a lubricant supply groove (81a, 81b, 81c, 81d, 81e, 81f) for supplying lubricant is formed in at least any one of the fixing member (45), the carrier (20), and the first main bearing (41),
wherein the lubricant supply groove (81b, 81c, 81d, 81e) is formed in the carrier (20),
wherein the carrier (20) includes a proximal portion carrier (21) and a distal portion carrier (22) connected to each other, and
the lubricant supply groove (81c, 81d) is formed in: a surface of the proximal portion carrier (21), the surface being in contact with the distal portion carrier (22); or a surface of the distal portion carrier (22), the surface being in contact with the proximal portion carrier (21).

2. The reduction gear (1) according to claim 1, wherein the lubricant supply groove (81a) is formed in the fixing member (45).

3. The reduction gear (1) according to claim 2, wherein the lubricant supply groove (81a) is formed in a surface of the fixing member (45), the surface being in contact with the carrier (20).

4. The reduction gear (1) according to claim 3, wherein the lubricant supply groove (81b) is formed in a surface of the carrier (20), the surface being in contact with the fixing member (45).

5. The reduction gear (1) according to claim 1, wherein the lubricant supply groove (81e) is formed in a surface of the carrier (20), the surface being in contact with the first main bearing (41).

6. The reduction gear (1) according to claim 1, wherein the lubricant supply groove (81f) is formed in the first main bearing (41).

7. The reduction gear (1) according to claim 6, wherein the lubricant supply groove (81f) is formed in a surface of the first main bearing (41), the surface being in contact with the carrier (20).

## Patentansprüche

1. Untersetzungsgetriebe (1), das umfasst:
ein Gehäuse (11) mit Innenzähnen (16), die an einer Innenumfangsseite desselben ausgebildet sind;
ein Zahnrad (24) mit Außenzähnen (24a), die mit den Innenzähnen (16) kämmen;
einen Träger (20), der das Zahnrad (24) drehbar hält;
eine Abtriebswelle (14), die mit dem Träger (20) verbunden ist;
ein erstes Hauptlager (41), das an einem Abschnitt der Abtriebswelle (14) an einer ersten Endseite des Trägers (20) angeordnet ist,
ein zweites Hauptlager (42), das an einem Abschnitt der Abtriebswelle (14) gegenüber dem Träger (20) angeordnet ist, wobei das erste Hauptlager (41) und das zweite Hauptlager (42) die Abtriebswelle (14) in Bezug auf das Gehäuse (11) drehbar halten;
sowie
ein Befestigungselement (45), das an einem Abschnitt des Trägers (20) an einer dem ersten Hauptlager (41) gegenüberliegenden Seite angeordnet und an der Abtriebswelle (14) in einem Zustand befestigt ist, in dem es an die Seite des Trägers (20) gedrückt wird,
**dadurch gekennzeichnet, dass**
eine Schmiermittel-Zuführnut (81a, 81b, 81c, 81d, 81e, 81f) zum Zuführen von Schmiermittel in dem Befestigungselement (45), dem Träger (20) oder/und dem ersten Hauptlager (41) ausgebildet ist,
wobei die Schmiermittel-Zuführnut (81b, 81c, 81d, 81e) in dem Träger (20) ausgebildet ist,
der Träger (20) einen hinteren Teilträger (21) und einen vorderen Teilträger (22) umfasst, die miteinander verbunden sind, und
die Schmiermittel-Zuführnut (81c, 81d) in einer Fläche des hinteren Teilträgers (21) ausgebildet ist, wobei die Fläche in Kontakt mit dem vorderen Teilträger (22) ist, oder in einer Fläche des vorderen Teilträgers (22) ausgebildet ist, wobei die Fläche in Kontakt mit dem hinteren Teilträger (21) ist.

2. Untersetzungsgetriebe (1) nach Anspruch 1, wobei die Schmiermittel-Zuführnut (81a) in dem Befestigungselement (45) ausgebildet ist.

3. Untersetzungsgetriebe (1) nach Anspruch 2, wobei die Schmiermittel-Zuführnut (81a) in einer Fläche des Befestigungselementes (45) ausgebildet ist und die Fläche in Kontakt mit dem Träger (20) ist.

4. Untersetzungsgetriebe (1) nach Anspruch 3, wobei die Schmiermittel-Zuführnut (81b) in einer Fläche des Trägers (20) ausgebildet ist und die Fläche in Kontakt mit dem Befestigungselement (45) ist.

5. Untersetzungsgetriebe (1) nach Anspruch 1, wobei die Schmiermittel-Zuführnut (81e) in einer Fläche des Trägers (20) ausgebildet ist und die Fläche in Kontakt mit dem ersten Hauptlager (41) ist.

6. Untersetzungsgetriebe (1) nach Anspruch 1, wobei die Schmiermittel-Zuführnut (81f) in dem ersten Hauptlager (41) ausgebildet ist.

7. Untersetzungsgetriebe (1) nach Anspruch 6, wobei die Schmiermittel-Zuführnut (81f) in einer Fläche des ersten Hauptlagers (41) ausgebildet ist und die Fläche in Kontakt mit dem Träger (20) ist.

## Revendications

1. Engrenage de réduction (1) comprenant:
un boîtier (11) comportant des dents internes (16) formées sur un côté périphérique intérieur de celui-ci;
un engrenage (24) ayant des dents externes (24a) engrenant avec les dents internes (16);
un support (20) qui maintient en rotation l'engrenage (24);
un arbre de sortie (14) relié au support (20);
un premier palier principal (41) disposé sur une partie de l'arbre de sortie (14) sur un premier côté d'extrémité du support (20),
un second palier principal (42) disposé sur une partie de l'arbre de sortie (14) à l'opposé du support (20);
dans lequel le premier palier principal (41) et le second palier principal (42) maintiennent en rotation l'arbre de sortie (14) par rapport au boîtier (11);
et
un élément de fixation (45) disposé sur une partie du support (20) sur un côté opposé au premier palier principal (41) et fixé à l'arbre de sortie (14) dans un état où il est pressé contre le côté du support (20),
**caractérisé en ce que**
une rainure d'alimentation en lubrifiant (81a, 81b, 81c, 81 d, 81e, 81f) est formée dans au moins l'un des éléments suivants : l'élément de fixation (45), le support (20) et le premier palier principal (41),
dans lequel la rainure d'alimentation en lubrifiant (81b, 81c, 81 d, 81 e) est formée dans le support (20),
dans lequel le support (20) comprend un support de partie proximale (21) et un support de partie distale (22) reliés l'un à l'autre, et
la rainure d'alimentation en lubrifiant (81c, 81d) est formée dans une surface du support de la partie proximale (21), la surface étant en contact avec le support de la partie distale (22); ou une surface du support de la partie distale (22), la surface étant en contact avec le support de la partie proximale (21).

2. Engrenage de réduction (1) selon la revendication 1, dans lequel la rainure d'alimentation en lubrifiant (81a) est formée dans l'élément de fixation (45).

3. Engrenage de réduction (1) selon la revendication 2, dans lequel la rainure d'alimentation en lubrifiant (81a) est formée dans une surface de l'élément de fixation (45), la surface étant en contact avec le support (20).

4. Engrenage de réduction (1) selon la revendication 3, dans lequel la rainure d'alimentation en lubrifiant (81b) est formée dans une surface du support (20), la surface étant en contact avec l'élément de fixation (45).

5. Engrenage de réduction (1) selon la revendication 1, dans lequel la rainure d'alimentation en lubrifiant (81 e) est formée dans une surface du support (20), la surface étant en contact avec le premier palier principal (41).

6. Engrenage de réduction (1) selon la revendication 1, dans lequel la rainure d'alimentation en lubrifiant (81f) est formée dans le premier palier principal (41).

7. Engrenage de réduction (1) selon la revendication 6, dans lequel la rainure d'alimentation en lubrifiant (81f) est formée dans une surface du premier palier principal (41), la surface étant en contact avec le support (20).
